Europäisches Patentamt

**European Patent Office**

**Office européen des brevets**

(19)

(11) Publication number: **0 038 651**
**A1**

(12) .**EUROPEAN PATENT APPLICATION**

(21) Application number: **81301566.6**

(22) Date of filing: **10.04.81**

(51) Int. Cl.³: **C 04 B 41/32**
**C 08 K 5/05**

(30) Priority: **18.04.80 GB 8012916**

(43) Date of publication of application:
**28.10.81 Bulletin 81/43**

(84) Designated Contracting States:
**AT BE CH DE FR GB IT LI LU NL SE**

(71) Applicant: **Fosroc International Limited**
**36 Queen Anne's Gate**
**London, SW1H 9AR(GB)**

(72) Inventor: **Mason, Anthony John**
**Vimy Road**
**Leighton Buzzard Bedfordshire(GB)**

(74) Representative: **Shaw, Laurence**
**Foseco Minsep Group Patents Department 285 Long Acre**
**Nechells Birmingham B7 5JR(GB)**

(54) Concrete curing membrane.

(57) A concrete curing membrane is formed by an emulsion including water, a film-forming ingredient and a minor proportion of a photoinitiator, and an emulsifier for the film-forming ingredient. The photoinitiator is preferably acetophenone, benzophenone, benzoin or a benzoin ether and preferably less than 1% by weight is present in the emulsion.

EP 0 038 651 A1

FOSROC INTERNATIONAL LIMITED                    CBP 120

- 1 -

## CONCRETE CURING MEMBRANE

The invention relates to a curing membrane of
the type which is applied to the surface of setting concrete in order to delay the evaporation of the gauging
water, so improving the quality of the concrete formed.
In practice, a chemical composition is applied to the
concrete and this breaks down to form a chemical
membrane on the surface of the concrete.

According to the invention, a composition for
forming a concrete curing membrane comprises an emulsion
comprising as the continuous phase water, and as the
disperse phase a film-forming ingredient which forms a
film having -C-C- linkages, and a minor proportion of
a photoinitiator which upon exposure to light releases
free radicals, and an emulsifier for the film-forming
ingredient.

The film-forming ingredient preferably
comprises a wax, most preferably a petroleum wax.  Such
a wax typically has -C-C- linkages in the long chain
molecules and such linkages can be broken by attack by
free radicals.

The photoinitiator may be acetophenone, benzophenone, benzoin or a benzoin ether.  In the presence of
ultra-violet light these chemicals break down to release
free radicals.  The concentration of photoinitiator
present will determine the rate at which the film is to
be broken down.  Generally the curing membrane film is
advantageously present on the concrete for 14 to 28 days
and to ensure that the film is thereafter broken down
the concentration of the photoinitiator should be
adjusted appropriately to the ultra-violet rays of the
prevailing light.  For example, the concentration of
photoinitiator in a composition to form a membrane for
use in a hot weather climate will be much less than in
one for use in Great Britain.  In general, the concentration of the photoinitiator will be less than 1%
by weight, preferably less than 0.5% by weight.

The emulsion includes an emulsifier, most
preferably a cationic emulsifier in order that the
emulsion may be broken by the alkaline nature of the
setting concrete.  If there is a tendency for the
emulsion to be broken too rapidly so that wax droplets
are fromed on the concrete instead of a film, this may
be arrested by the inclusion of a non-ionic wetting agent
in the emulsion.

The emulsion may be applied to the setting
concrete in any convenient way; it is preferred to spray
the emulsion on the concrete.  The emulsion should be
applied as soon as possible after the concrete has been
surface finished, i.e. trowelled, tamped or textured.
It is preferred that the concrete be free of surface
water; if such water is present it should be removed
before the emulsion is applied to the setting concrete.

The invention further includes a method of forming a curing membrane on a body of setting concrete comprising applying thereto an emulsion as defined above, allowing the emulsion to be broken to form a film and leaving the formed film for sufficient time to allow it to be broken down by ultra-violet light, at a rate controlled by the amount of photoinitiator present.

The invention includes as a new composition of matter, a wax and a photoinitiator which upon exposure to ultra-violet light releases free radicals, optionally with an emulsifier for the wax, preferably a cationic emulsifier.

An embodiment of the invention is given by way of illustration in the following example in which all parts are by weight.

### Example

A petroleum wax (200 parts) was melted with stirring and a cationic emulsifier (50 parts) was blended in, followed by benzoin-n-butyl ether (0.5 parts) and then the whole was mixed with hot water (750 parts) to form an oil-in water emulsion. The formed composition was cooled and a further amount of non-ionic ethoxylated fatty alcohol wetting agent (50 parts of 1 1% aqueous solution) was added. The emulsion was then sprayed onto a setting body of concrete at ambient temperature of $20^{\circ}$C. The emulsion broke on contact with the concrete to form a film which cured and then lasted as a curing membrane for 21 days.

FOSROC INTERNATIONAL LIMITED                    CBP 120

- 4 -

## CLAIMS

1.      A composition for forming a concrete curing membrane, comprising an emulsion comprising as the continuous phase water, and characterised in that the disperse phase comprises a film-forming ingredient which forms a film having -C-C- linkages, and an emulsifier for the film-forming ingredient, and a minor proportion of a photoinitiator which upon exposure to light releases free radicals.

2.      A composition according to Claim 1, characterised in that the photoinitiator is acetophenone, benzophenone, benzoin or a benzoin ether.

3.      A composition according to Claim 1 or 2, characterised in that the concentration of the photoinitiator is less than 1% by weight.

4.      A composition according to Claim 3, characterised in that the concentration of photoinitiator is less than 0.5% by weight.

5.      A composition according to any preceding Claim, characterised in that the film-forming ingredient comprises

0038651

a wax.

6.      A composition according to Claim 5, characterised in that the wax is a petroleum wax.

7.      A composition according to any preceding Claim,
characterised by a cationic emulsifier.

8.      A composition according to any preceding Claim,
characterised by a non-ionic wetting agent.

9.      A method of forming a curing membrane on a body
of setting concrete characterised by applying thereto an
emulsion according to any preceding Claim, allowing the
emulsion to be broken to form a film and leaving the
formed film for sufficient time to allow it to be broken
down by ultra-violet light, at a rate controlled by the
amount of photoinitiator present.

10.     For use in a composition according to any of
Claims 1 to 8 or the method of Claim 9, a composition of
matter comprising a wax and a photoinitiator.

11.     A composition according to Claim 10, including
an emulsifier for the wax.

0038651

European Patent Office

**EUROPEAN SEARCH REPORT**

Application number

EP 81 30 1566.6

## DOCUMENTS CONSIDERED TO·BE RELEVANT

| Category | Citation of document with indication, where appropriate, of relevant passages | Relevant to claim |
|---|---|---|
| A | <u>AU - B - 441 841</u> (A.C. HATRICK CHEMICALS)<br>* pages 2, 3 *<br>-- | 1 |
| A | <u>DE - B2 - 2 312 519</u> (DAICEL LTD.)<br>* claims; column 9 *<br>-- | 1-4 |
| A | <u>DE - A1 - 2 735 665</u> (C.F. DELONG)<br>* claims, page 12 *<br>---- | 1,2,<br>3,4 |

### CLASSIFICATION OF THE APPLICATION (Int. Cl.³)

C 04 B 41/32
C 08 K 5/05

### TECHNICAL FIELDS SEARCHED (Int. Cl.³)

C 04 B 17/00
C 04 B 41/00
C 08 F 8/40
C 08 K 5/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 03-06-1981 | HÖRNER |

EPO Form 1503.1 06.78